(19) Europäisches Patentamt
European Patent Office
Office européen des brevets

(11) Veröffentlichungsnummer : **0 356 370 B1**

(12) # EUROPÄISCHE PATENTSCHRIFT

(45) Veröffentlichungstag der Patentschrift :
08.05.91 Patentblatt 91/19

(21) Anmeldenummer : 89710065.7

(22) Anmeldetag : 23.02.87

(51) Int. Cl.⁵ : **B61B 13/08, B60L 13/04, B65G 54/02**

(54) **Magnetkraftsystem für reibungsarmen Transport von Lasten.**

(30) Priorität : 27.02.86 DE 3606459
16.10.86 DE 3635258

(43) Veröffentlichungstag der Anmeldung :
28.02.90 Patentblatt 90/09

(45) Bekanntmachung des Hinweises auf die
Patenterteilung :
08.05.91 Patentblatt 91/19

(84) Benannte Vertragsstaaten :
AT BE CH DE ES FR GB GR IT LI LU NL SE

(56) Entgegenhaltungen :
DE-A- 2 426 053
DE-A- 3 347 635
FR-A- 2 163 547

(56) Entgegenhaltungen :
FR-A- 2 228 650
US-A- 2 812 203
US-A- 3 780 668
US-A- 4 324 185

(60) Veröffentlichungsnummer der früheren
Anmeldung nach Art. 76 EPü : 0234543

(73) Patentinhaber : Schuster, Peter
Prinzregentenstrasse 41
W-8201 Raubling (DE)

(72) Erfinder : Schuster, Peter
Prinzregentenstrasse 41
W-8201 Raubling (DE)

(74) Vertreter : Petra, Elke, Dipl.-Ing. et al
Tattenbachstrasse 9
W-8000 München 22 (DE)

EP 0 356 370 B1

Jouve, 18, rue Saint-Denis, 75001 PARIS

# Beschreibung

Die Erfindung bezieht sich auf ein Magnetsystem für reibungsarmen Transport von Lasten, nach dem Oberbegriff des Anspruches 1.

Die bekannten Magnetkraftsysteme, auch Gleitsysteme genannt, bewegen sich praktisch reibungslos über Trägerschienen, in einem bestimmten Abstand von diesen, fort. Diese Systeme sind insgesamt sehr aufwendig und kompliziert, so daß ihre Wirtschaftlichkeit in Frage gestellt wird.

So z.B. wird in dem VDI-Nachrichten Nr. 1 vom 03.01.86, die Magnetbahn "Transrapid 06" aus Emden beschrieben. Es wird ersichtlich, daß ein großer technischer Aufwand notwendig ist, um das Fahrzeug einen Zentimeter hoch zu heben. Leider ist der notwendige Energieverbrauch nicht angegeben, um das 120 t schwere Fahrzeug in der Schwebe zu halten. Bei 196 Personen Traglast entspricht dieses jedoch einem Gewicht von ca. 120 000 kg, also 612 kg pro Person (je Person ca. 80 kg angesetzt). Dazu kommt noch die teuere Anwendungstechnik und die noch unglösten Probleme bei Schnee und Eis.

Größere Schwierigkeiten gibt es noch bei den bekannten japanischen Schwebebahnen. Einige müssen auf Rädern rollen, bis sie eine Geschwindigkeit von 200 km/h erreichen, wo dann das Schweben beginnt.

Ähnlich funktionniert die in der DE-OS 24 26 053 beschriebene sog. "Berliner Magnetbahn", deren Unterschied jedoch darin besteht, daß die Führungsrollen über dem Magnetfeld geführt werden.

Des weiteren ist aus der französischen Patentanmeldung FR-A-2.228.650 ein Magnettransportsystem bekannt, in welchem Magnete, insbesondere Dauermagnete, ferromagnetischen Profilen zugeordnet sind gemäß dem ersten Teil des Anspruchs 1. Die Magnete sind jedoch im Prinzip der Anziehung, d.h. ungleichartige Pole sich gegenüberstehend, im Verhältnis zu den Profilen angeordnet. Zudem sind sie im wesentlichen horizontal liegenden ferromagnetischen Wänden zugeordnet. Dadurch wird insgesamt eine relativ geringe Tragfähigkeit erzielt. Die Traglast ist auch hier ein Vielfaches der Nutzlast.

Aus der DE-A-33 47 635 ist ein Magnetkraftsystem bekannt, welches in der Anordnung der Magnete zu Trägerprofilen ebenfalls auf dem Prinzip der Anziehung, d.h. entgegengesetzte Pole in Bezug auf die ferromagnetischen Wänden sich gegenüberliegend, aufgebaut ist. Auch hier wird eine nur verhältnismäßig geringe Tragkraft erzielt. Zudem ist die benutzte Konstruktion sehr aufwendig, da viele Magnete angeordnet werden müssen, um eine bestimmte Last anheben zu können.

Auch zeigt die DE-A-21 46 143 ein Magnetkraftsystem mit mindestens einem Magnet und mindestens einer Polfläche, an welchem die Last befestigt ist. Des weiteren ist ein an einem ortsfesten Träger angebrachtes, weichmagnetisches Trägerprofil vorgesehen, dessen Profilwand vertikal orientiert ist und die Profilfläche in Richtung Träger überragt. Es werden jedoch Führungssystem mit geregelten Elektromagneten als Seitenführung verwendet, was den Aufbau des Systems relativ komplex werden läßt.

Schließlich ist aus der US-A-4, 424 185 ein Transportsystem bekannt, bei welchem mit alternierenden Polen in Fahrtrichtung hintereinander angeordnete Permanentmagnete vorgesehen, an denen die Last hängt. Zu beiden Polseiten der Permanentmagnete sind zwei aus ferromagnetischen Blechpaketen gebildete Schienen vorgesehen, welche im wesentlichen vertikale, zueinander und zu den Magnetpolen parallele Wände bilden. Die Magnete sind in Fahrtrichtung mit Luftspalt zueinander und mit alternierender Polausrichtung angeordnet, so daß ein im wesentlichen horizontaler Magnetlinienfluß jeweils zwischen zwei aufeinanderfolgenden Magneten vorhanden ist. Die Relativkonstanthaltung der Luftspalte zwischen Trägerprofilen und Magneten wird durch entsprechende Führungsrollen realisiert. In den beblechten Trägerprofilen sind entlang der gesamten Fahrstrecke elektromagnetische Spulen eingelagert, welche durch entsprechende Steuerung von außen zusammen mit den an der Last befestigten in Fahrtrichtung wechselpolig angeordneten Dauermagnten gleichzeitig für Vortrieb und zum Teil auch mit für die Schwebung sorgen. Durch die blechlamellenartige Ausbildung der Trägerprofile und die in diesen eingearbeiteten Spulen wird der Wirkungsgrad relativ stark herabgesetzt. Die Bauweise, insbesondere der Trägerprofile ist sehr komplex und kostenaufwendig, insbesondere da die gesamte Länge der Fahrstrecke aus den Blechpaketen mit Spulen dazwischen gefertigt sein muß.

Aufgabe der Erfindung ist es, ein Magnetkraftsystem vorhergehend beschriebener Gattung anzugeben, welches einfach und leicht im Aufbau ist, eine sichere Funktion bei geringem Energieverbrauch und einen hohen Wirkungsgrad sicherstellt.

Diese Aufgabe wird erfindungsgemäß durch ein Magnetkraftsystem mit den Merkmalen des Anspruches 1 gelöst.

Demgemäß sind jeweils einer vertikalen Wand des Trägerprofils zwei Magnetpaare zugeordnet und zwar so, daß die sich in Bezug auf die Wand gegenüberstehenden Pole jeweils gleichgepolt sind, also N-N, bzw. S-S. Hierdurch kommt das Prinzip der Abstoßund zur Wirkung. Versuche haben gezeigt, daß die Verwendung des Prinzips der Abstoßung im Vergleich zum Prinzip der Anziehung einen mehrfach erhöhten Wirkungsgrad erzielt.

Gemmäß einer Weiterbildung des Erfindungsgedankens können dabei die Magnetpaare in Transportrichtung gesehen, jeweils eine alternative Polausrichtung aufweisen, wobei ein Luftspalt zwischen den aufeinanderfolgenden Magneten eines Paares vorgesehen ist. Hierdurch wird eine horizontale Kraftlinienführung erreicht. Diese kann erfindungsgemäß noch wesentlich erhöht werden, wenn die äußeren Magnetpole jeweils eines Magnetpaares über eine ferromagnetische Platte kurzgeschlossen sind. Dabei können erfindungsgemäß die kurzschließenden Platten als ein nach oben offenes U-Profil ausgebildet sein, an dessen Schenkel-Innenseite die Magnete befestigt sind. Diese Ausführung mit dem U-Profil bringt jeddoch nur eine Änderung in Bezug auf den Magnetfluß dann, wenn die Magnetpaare in einer weiteren erfindungsgemäßen Ausführungsform in Transportrichtung gesehen jeweils eine gleichpolige Ausrichtung aufweisen, wobei kein Luftspalt zwischen den aufeinanderfolgenden Magneten vorgesehen ist. Dann nämlich werden die Magnetkraftlinien in vertikaler Ebene, und nicht wie bei den vorhergehenden Ausführungsbeispielen horizontal, verlaufen. Dies bringt den Vorteil, daß Wirbelströme im Trägersystem dann nur noch in sehr reduziertem Maße auftreten können.

Gemäß einer Weiterbildung des Erfinduungsgedankens ist das Trägerprofil ein nach unten offenes U-Profil aus ferromagnetischem Material, dessen Schenkel zueinander parallele vertikale Profilwände bilden, wobei die Magnete zwischen den Profilwänden angeordnet sind. Hier reicht die Anordnung mindestens eines Magneten. Die Magnetlinien werden über das oben geschlossene U-Profil geleitet. Dies ist die konstruktiv einfachste Lösung, die zugleich sehr wirtschaftlich ist. Natürlich erhöht sich der Wirkungsgrad, wenn mehrere Magnete mit gleicher Polausrichung hintereinander angeordnet sind.

Durch die Anordnung mehrerer Profile nebeneinander oder von Profilen nebeneinander, die mehrere zueinander parallele Profilwände mit entsprechend zugeordneten Magneten aufweisen kann eine erhebliche Erhöhung der Traglast erzielt werden.

Das erfindungsgemäße Magnetkraftsystem erlaubt einen Einsatz in unterschiedlichen konstruktiven Lösungen. So kann die durch das System zu befördernde Last oberhalb der Profil/Magnet-Anordung vorgesehen sein. Dadurch wird eine sog. stehende Anordnung erzielt.

Der Antrieb des Fahrzeugs kann dabei auf verschiedene Art erfolgen, z.B. mit Antriebsrollen, welche die Trägerschienen berühren, oder mit Hilfe eines Linearmotors.

Die von dem System zu befördernde Last kann jedoch auch unterhalb der Profil/Magnet-Anordnung vorgesehen sein. Hierzu wird die sog. hängende Anordnung erzielt. Diese hängende Anordnung kann als vorteilhaftere Variante angesehen werden, da hier die ferromagnetischen Trägerprofile, als auch die Antriebselemente unterhalb eines Trägersystems, beispielsweise eines Betonträgers vorgesehen sind. Dadurch wird eine Witterungsanfälligkeit, insb. im Winter, vermieden.

Die Erfindung wird nachfolgend anhand mehrerer Ausführungsbeispiele unter Bezug auf die Zeichnung näher erläutert.

Es zeigt :

Fig. 1 bis 10 verschiedene Ausbildungsformen und Anordnungsweisen der im erfindungsgemäßen Magnetkraftsystem verwendeten Trägerprofile und Magnete, davon :

Fig. 1 eine erste Ausführungsform mit U-förmigem Trägerprofil und zwischen den Schenkeln des Profils angeordneten Magneten, unbelastet

Fig. 2 die gleiche Anordnung wie in Fig. 1, jedoch mit unter Last aus dem Profil senkrecht herabgezogenen Magneten,

Fig. 3 eine zweite Anordnung mit zwei plattenförmigen Trägerprofilen und dazwischen jeweils paarweise angeordneten Magneten,

Fig. 4 eine dritte Ausführungsform mit einem plattenförmigen Trägerprofil und zu beiden Seiten des Profils jeweils paarweise angeordneten über Platten kurzgeschlossene Magneten,

Fig. 5 eine Ausführung wie in Fig. 4, mit einem Rohr statt der mittigen Profilplatte,

Fig. 6 eine Ausführung wie in Fig. 4, mit einem Kurzschluß-U-Profil statt Kurzschlußplatten für die Magnete,

Fig. 7 eine weitere Ausführungsform, mit U-Trägerprofil und zwischen den Schenkeln und außerhalb der Schenkel angeordneten Magneten,

Fig. 8 eine Ausführung wie in Fig. 7, mit einem nach oben offenen Kurzschluß-U-Profil für die äußeren Magnete,

Fig. 9 eine Mehrfachanordnung der Ausbildung gemäß Fig. 7,

Fig. 10 einen horizontalen Schnitt nach den Linien X-X aus Fig. 1, die Anordnung von Führungsrollen an den Magneten im Verhältnis zu den Profil-Schenkeln darstellend,

Fig. 11 bis 14 Anorndungsmöglichkeiten des Systems in bezug auf Betonträger und Last, davon :

Fig. 11 eine erste Anordnungsweise mit der zu befördernden Last unterhalb der Profil/Magnet-Anordnung (hängende Anordnung),

Fig. 12 eine Anordnungsweise mit der zu befördernden Last oberhalb der Profil/Magnet-Anordnung (stehende Anordnung),

Fig. 13 eine Seitenansicht des Systems mit hängender Last, wobei die Last ein Personen-Beförderungsfahrzeug ist, und

Fig. 14 eine Frontansicht der Anordnung nach Fig. 13.

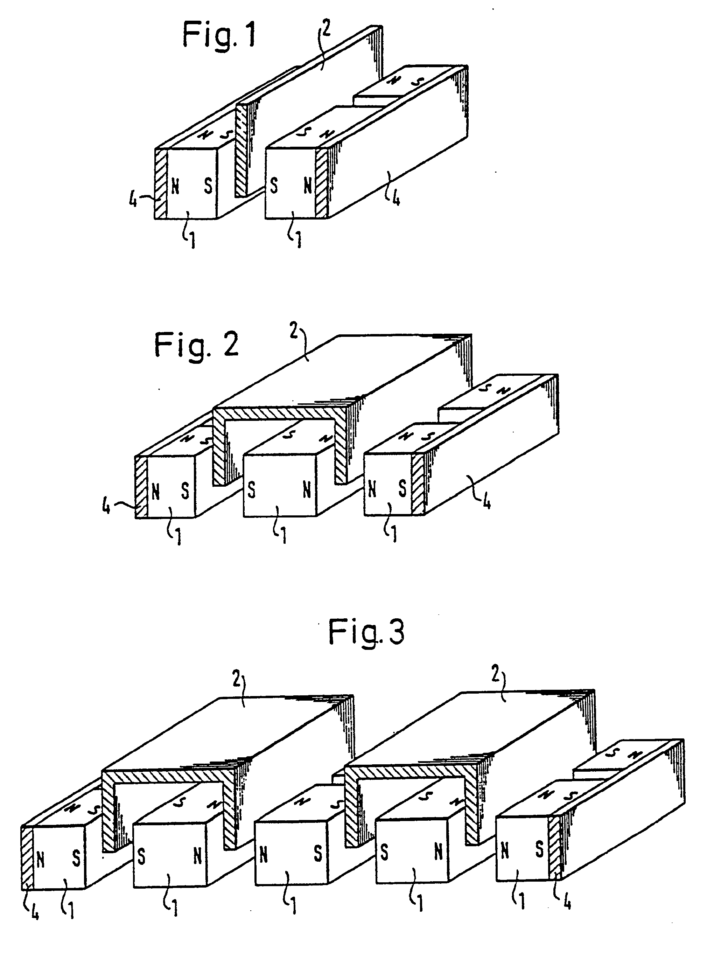

In dem in Fig. 1 und 2 dargestellten Ausführungsbeispiel ist als Trägerprofil 2 eine U-förmige Schiene aus ferromagnetischem Material vorgesehen. Zwischen den beiden vertikalen Schenkeln des nach unten offenen Profils 2 ist ein Magnet 1 so angeordnet, daß die beiden Polflächen jeweils nahe beabstandet zu den Seitenwänden und im wesentlichen parallel mit diesen angeordnet sind. Dadurch vermögen die Magnetkraftlinien, von dem einen Pol ausgehend, über die nahe Seitenwand, die Profilbasis und die zweite Seitenwand, in den zweiten Pol des Magneten 1 zu verlaufen. Die magnetischen Kraftlinien erhalten dadurch einen optimalen Verlauf.

Fig. 2 zeigt die Situation unter sehr großer Last bei einer Anordnung nach Fig. 1. Je weiter der Magnet nach unten durch ein daran befestigtes Gewicht herausgezogen wird, um so größer wird die dagegen wirkende Kraft (Schwebekraft). Bei Belastung werden die Magnete so weit aus dem Profil herausgezogen, bis sich die Anziehungskraft mit der Last ausgleicht. Für die senkrechte Lage der Magnete ist folglich keine Regelung notwendig.

Mit dem in Fig. 3 dargestellten Ausführungsbeispiel besteht das Trägerprofil 2 aus zwei zueinander parallelen, vertikal angeordneten ferromagnetischen Platten, die nicht über weiteres ferromagnetisches Material kurzgeschlossen sind. Zwischen den Innenflächen der Platten 2 sind jeweils in Längsrichtung hintereinander angeordnete Magnetpaare vorgesehen, wobei die Magnetpaare jeweils mit gegensinnigen Polen zueinander zugekehrt sind.

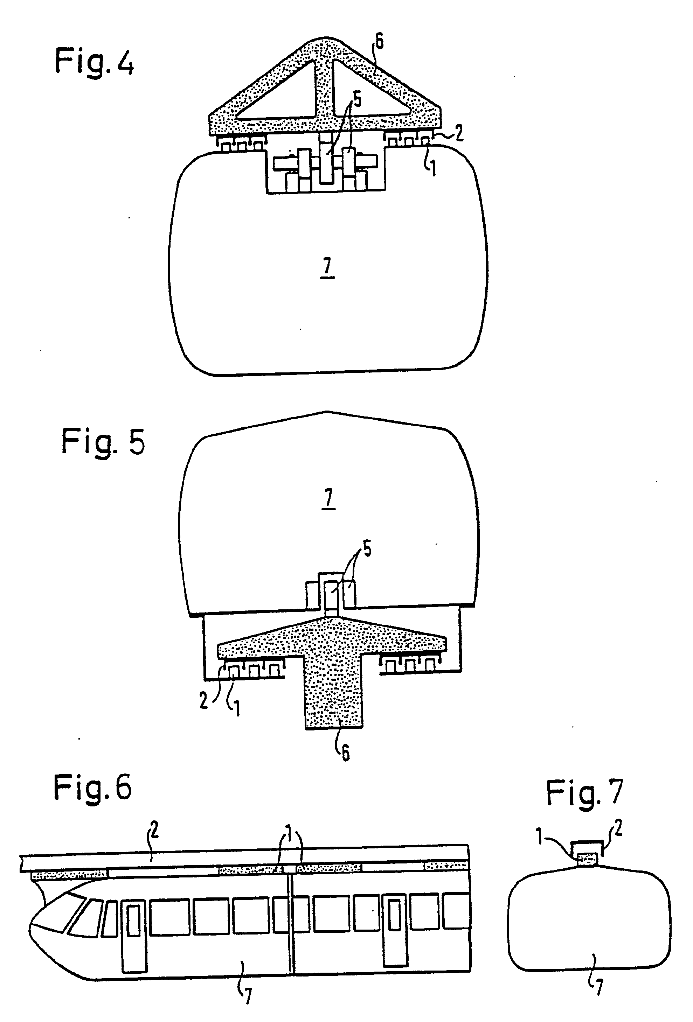

Die in Fig. 4 dargestellte Version zeigt die Ausbildung des schienenförmigen Trägerprofils 2 als glatte Platte, zu deren beiden Seiten jeweils gegenüberliegende Magnetpaare angeordnet sind. In Bezug auf die Profilschiene 2 sind die sich gegenüberliegenden Magnete mit gleichsinnigen Polen einander zugekehrt, also S-S bzw. N-N (Abstoßungsprinzip). Die äußeren Pole des jeweils in Längsrichtung zueinander angeordneten Magnetpaares sind über eine ferromagnetische Platte 4 miteinander kurzgeschlossen. Hierdurch wird der Magnetkraftlinienfluß optimiert, welcher zwischen den in Längsrichtung angeordneten Magnetpaaren und jeweils dem Profil 2 und der Platte 4 verlaufen.

Fig. 5 zeigt eine Ausführung wie in Fig. 4, jedoch findet statt der Profilwand zwischen den Magneten ein ferromagnetisches Rohr Verwendung.

Fig. 6 zeigt ebenfalls eine Ausbildung wie in Fig. 4, nur ist statt der kurzschließenden Platten 4 ein nach oben offenes U-Profil verwendet worden. Die Magnete sind in Längsrichtung fest aneinander anschließend an den Innenseiten der Profilschenkel angeordnet.

Das in Fig. 7 dargestellte Ausführungsbeispiel zeigt eine kraftverstärkte Ausführungsform, bei welcher das Trägerprofil 2 ein nach unten offenes U-Profil ist. In Bezug auf seine beiden Seitenwände bzw. Schenkel sind sowohl zwischen diesen als auch außerhalb dieser, Magnete in der gleichen oder ähnlichen Weise wie in Fig. 1 und 4 angeordnet. Es sind auch hier jeweils gegenüberliegende Polflächen gleichsinnig gerichtet, so daß die Kraftlinien, sich abstoßend, einen entsprechenden Verlauf durch die ferromagnetischen Trägerwände bzw. Kurzschlußplatten nehmen. Insgesamt ist in bezug auf den Kraftlinienverlauf, als auch auf die erzeugte Tragkraft, von einer Kombination der Fig. 1 und 4 auszugehen. Es wird also eine entsprechende Kraftverstärkung erzielt.

Fig. 8 zeigt eine ähnliche Anordnung wie in Fig. 7, jedoch sind hier, ähnlich wie in Fig. 6 die äußeren eng aufeinanderfolgenden Magnete 1 über ein nach oben offenes U-Profil 2 kurzgeschlossen. Die inneren Magnete 1 sind zu dem Kurzschlußprofil 4 über z.B. eine Isolierplatte 8 beabstandet. Bei dieser Ausführung sind praktisch zwei Magnetlinienkreisläufe vorhanden. Der erste läuft vom inneren Magnet 1 über das innere U-Profil 2, wie im Beispiel nach Fig. 1. Der zweite läuft über das Kurzschlußprofil 4, die äußeren Magnete und dann das innere Profil 2. Hiermit wird eine größere Magnetdichte als im Beispiel nach Fig. 7 erzielt. Durch die Gewichtsvergrößerung wird jedoch der Wirkungsgrad insgesamt nicht wesentlich erhöht.

Fig. 9 zeigt eine Mehrfachanordnung der Ausführungsform nach Fig. 7. Durch diese Anorndung wird eine Krafterhöhung erzielt.

In Fig. 10 ist die Anordnung der Magnete 1 im Verhältnis zu den Seitenwänden der Trägerprofile 2 ersichtlich. Führungsrollen 3 sind dabei so angeordnet, daß die Magnete auch in Krümmungen genau in der Mitte zwischen den Wänden gehalten werden.

Abbildung 11 zeigt eine Anwendungsmöglichkeit des Systems 1, 2 in hängender Anordnung. An einem Betonträger 6 sind an der Unterseite die Trägerprofile 2 befestigt, während an der Oberseite einer darunter angeordneten Last 7, die beispielsweise ein Transportfahrzeug sein kann, die Magnete 1 in Zusammenwirkung mit den Profilen 2 vorgesehen sind. An der Last bzw. am Fahrzeug 7 sind an der Oberseite desweiteren die Führungsrollen 3 vorgesehen, die mit einer mittigen Trägerschiene zusammenarbeiten. Die Fortbewegung wird mit einem ebenfalls mittig angeordneten Linearmotor 5 bewerkstelligt.

Fig. 12 zeigt eine sog. stehende Anordnung der Last 7 in bezug auf das System 1, 2. Die Profilträger 2 befinden sich auch hier an der Unterseite der Betonträger, bzw. von Seitenarmen der Betonträger 6. Die Last bzw. das Fahrzeug 7 ist oberhalb des Trägers 6 angeordnet und untergreift die Seitenarme des Betonträgers 6, die Magnete 1 so tragend, daß sie mit den Trägern 2 entsprechend zusammenwirken. Der Betonträger 6 trägt an seiner Oberseite mittig eine Führungsschiene für die hier nicht dargestellten Führungsrollen und den Liniearmotor 5 für die Fortbewegung.

In Fig. 13 und 14 ist ein praktisches Ausführungsbeispiel dargestellt. Die Last bzw. das Fahrzeug 7 ist hier ein personenbeförderndes Fahrzeug. An dessen Oberseite sind die Magnete 1 befestigt, welche in einen nach unten offenen U-Träger hineinreichen. Es wird ersichtlich, daß das Fahrzeug 7 in hängender Anordnung befördert wird.

## Ansprüche

1. Magnetkraftsystem für den reibungsarmen Transport von Lasten, mit
   – mindestens einem an einem ortsfesten Träger befestigten weichmagnetischen Trägerprofil (2) mit mindestens einer vertikal und gleichzeitig zur Transportrichtung parallel orientierten Profilwand,
   – mindestens zwei sich in bezug auf eine Profilwand gegenüberliegenden Permanentmagnetpaaren (1), wobei ein Magnetpaar aus zwei in Transportrichtung hintereinander entlang der Profilwand und im wesentlichen parallel zu dieser und mit quer zur Transportrichtung und in Transportrichtung alternativ ausgerichteten Polen besteht, deren jeweilige äußeren Pole über eine ferromagnetische Platte (4) kurzgeschlossen sind
   – je einem Luftspalt zwischen Magneten und Trägerprofilwand und zwischen in Transportrichtung aufeinanderfolgenden Magneten, wobei die Lasten an den Magneten befestigt sind, und
   – mechanischen Mitteln zur konstanten Aufrechterhaltung der Luftspalte, dadurch **gekennzeichnet**,
   – daß die sich in bezug auf die Profilwand (2) gegenüberstehenden Pole der Magnete (1) jeweils gleiche (N-N, S-S) Polausrichtung aufweisen
   (Abstoßungsprinzip).

2. Magnetkraftsystem nach Anspruch 1, dadurch gekennzeichnet, daß als ferromagnetisches Trägerprofil (2) ein nach unten offenes U-Profil vorgesehen ist, daß im Inneren des Profils, zwischen den beiden vertikalen Schenkeln bzw. Seitenwänden, mindestens ein nicht kurz geschlossenes Magnetpaar (1) angeordnet ist und daß an der jeweiligen Außenseite der Profil-Seitenwände jeweils mindestens ein Magnetpaar (1) vorgesehen sind, wobei jeweils gleichpolige Magnetflächen in bezug auf die Vertikalwände einander zugekehrt sind (Abstoßungsprinzip).

3. Magnetkraftsystem nach Ansprüchen 1 und 2, dadurch gekennzeichnet, daß zur Erhöhung der Traglast mehrere Profile (2) mit entsprechend zugeordneten Magneten (1) nebeneinander angeordnet sind.

4. Magnetkraftsystem nach Anspruch 1, dadurch gekennzeichnet, daß die von dem System (1, 2) zu befördernde Last (7) oberhalb der Profil/Magnet-Anordnung vorgesehen ist (stehende Anordnung).

5. Magnetkraftsystem nach Anspruch 1, dadurch gekennzeichnet, daß die von dem System (1, 2) zu befördernde Last (7) unterhalb der Profil/Magnet-Anordnung vorgesehen ist (hängende Anordnung).

6. Magnetkraftsystem nach Anspruch 1, dadurch gekennzeichnet, daß zum Transport in dem System (1, 2) ein Linearmotor (5) vorgesehen ist.

7. Magnetkraftsystem nach Anspruch 1, dadurch gekennzeichnet, daß zum Transport in dem System (1, 2) mit dem Profil zusammenwirkende, von mindestens einem Motor betätigte Antriebsrollen vorgesehen sind.

## Claims

1. A magnetic force system for low-friction transportation of loads, comprising
   – at least one ferromagnetic supporting profile (2) secured to a stationary support, with at least one vertically oriented profile wall which extends in parallel to the direction of transportation,
   – at least two pairs of permanent magnets (1) opposing each other relative to a profile wall, whereof one pair of magnets consists of two poles oriented transversely to the direction of transportation and, by alternation, in the direction of transportation, which are disposed in tandem in the direction of transportation, along said profile wall and essentially in parallel to the latter, the respectively outer poles of said pairs of magnets being short-circuited through a ferromagnetic plate (4),
   – respectively one air gap between the magnets and the supporting profile wall and between magnets in mutual succession in the direction of transportation, while the loads are attached to said magnets, and
   – mechanical means for permanently maintaining said air gaps, **characterized** in
   – that the poles of said magnets (1) which are opposite to each other in relation to the profile wall (2) respectively present the same (N-N, S-S) pole orientation (principle of repulsion).

2. A magnetic force system according to Claim 1, characterized in that a downwardly open U-section is provided as said ferromagnetic supporting profile (2), that inside said profile, between the two vertical legs or lateral walls at least one pair of magnets (1) is disposed which is not short-circuited, and that at each respective outside of said profile side walls at least one pair of magnets (1) is provided, with equipolar magnet areas facing each other respectively in relation to the vertical walls (principle of repulsion).

3. A magnetic force system according to Claims 1 and 2, characterized in that several profiles (2) with appropriately associated magnets (1) are disposed in side-by-side relationship so as to increase the load-carrying capacity.

4. A magnetic force system according to Claim 1, characterized in that the load (7) to be conveyed by the system (1, 2) is provided above the profile/magnet arrangement (upright arrangement).

5. A magnetic force system according to Claim 1, characterized in that the load (7) to be conveyed by the system (1, 2) is provided below the profile/magnet arrangement (suspended arrangement).

6. A magnetic force system according to Claim 1, characterized in that a linear motor (5) is provided for movement in the system (1, 2).

7. A magnetic force system according to Claim 1, characterized in that driving rollers are provided for movement in the system (1, 2) which cooperate with said profile and are driven by at least one motor.

## Revendications

1. Système à force magnétique pour le transport de charges à faible frottement, comprenant
   – au moins un profilé porteur (2) doux fixé à un porteur stationnaire, présentant au moins une paroi de profilé orientée verticalement et également parallèle au sens de transport,
   – au moins deux paires d'aimants permanents (1) disposées en opposition relativement à une paroi de profilé, dont une paire d'aimants est constituée par deux aimants les uns derrière les autres, en sens de transport, de ladite paroi de profilé et essentiellement en parallèle à celle-ci, et présentant des pôles orientés au travers au sens de transport en alternance,
   – respectivement un entrefer entre lesdits aimants et la paroi de profilé porteur et entre les aimants en succession en sens de transport, les charges étant fixées aux aimants, et
   – des moyens mécaniques (8) pour maintenir lesdits entrefers constants, **caractérisé** en ce
   – que lesdits pôles des aimants (1) qui se font face relativement à ladite paroi de profilé (2) présentent la même orientation polaire (X-N, S-S), respectivement (principe de répulsion).

2. Système à force magnétique selon la Revendication 1, caractérisé en ce qu'un profilé en U ouvert vers le bas est pourvu en tant que profilé porteur ferromagnétique (2), et en ce qu'à l'intérieur du profilé, entre les deux branches verticales ou parois latérales est disposé au moins une paire d'aimants (1) non mise en court-circuit, et en ce qu'à la face extérieure respective desdites parois de profilé latérales il y a au moins une paire d'aimants (1), des faces magnétiques de la même polarité se faisant face relativement aux parois verticales (principe de répulsion).

3. Système à force magnétique selon les Revendications 1 et 2, caractérisé en ce que plusieurs profilés (2) aux aimants correspondamment affectés (1) sont disposés les uns à coté des autres pour une multiplication de la capacité de charge.

4. Système à force magnétique selon la Revendication 1, caractérisé en ce que la charge (7) à transporter par le système (1, 2) est pourvu au-dessus de l'ensemble profilé/aimant (disposition debout).

5. Système à force magnétique selon la revendication 1, caractérisé en ce que la charge (7) à transporter par le système (1, 2) est pourvue en-dessous de l'ensemble profilé/aimant (disposition suspendue).

6. Système à force magnétique selon la Revendication 1, caractérisé en ce qu'un moteur linéaire (5) est pourvu pour le transport dans le système (1, 2).

7. Système à force magnétique selon la Revendication 1, caractérisé en ce que des rouleaux d'entraînement actionnés par au moins un moteur, qui coopèrent avec ledit profilé, sont pourvus pour le transport dans le système (1, 2).

Fig. 1

Fig. 2

Fig. 3

Fig. 4

6

5

2

1

7

Fig. 5

7

5

2
1

6

Fig. 6

2

1

7

Fig. 7

1

2

7